# EUROPEAN PATENT SPECIFICATION

(11) **EP 3 007 669 B1**
(45) Date of publication and mention of the grant of the patent: **16.01.2019**
(21) Application number: 13731668.3
(22) Date of filing: 14.06.2013
(51) Int. Cl.: A61G 3/08, B60P 7/08, B60R 22/00

(54) **A WHEELCHAIR TIE DOWN SYSTEM**
SYSTEM ZUR FESTBINDUNG EINES ROLLSTUHLS
SYSTÈME D'ARRIMAGE DE FAUTEUIL ROULANT

(43) Date of publication of application: 20.04.2016
(73) Proprietor: Pedersen, Claus Dahl, 7700 Thisted (DK)
(72) Inventor: Pedersen, Claus Dahl, 7700 Thisted (DK)
(74) Representative: Larsen, Hans Ole
(86) International application number: PCT/DK2013/000041
(87) International publication number: WO 2014/198273

(56) References cited:
- EP-A2- 2 777 668
- WO-A1-92/02389
- GB-A- 2 200 529
- GB-A- 2 479 178
- US-A- 3 050 799
- US-A- 5 176 402
- US-A1- 2004 256 827
- US-A1- 2010 092 263

## Description

The present invention relates to a wheelchair tie down system for use in a vehicle, comprising at least one strap and a hook with an eye for receiving the at least one strap.

When wheelchair users have to travel, it is often required that a vehicle, such as a van or bus is used for transporting the person sitting in the wheelchair. To obtain safe transportation the wheelchair is attached to the vehicle in a fixed position which will substantially prevent the wheelchair from moving during the transportation. Thus, the fastening devices should not only be able to withstand the forces that influence the wheelchair and user during normal transport, but also be able to withstand the much greater forces that arise if the vehicle is involved in an accident.

A commonly used procedure is to fasten the wheelchair to the vehicle by use of straps and hooks, and several systems based on this principle are known e.g. from British patent documents GB 2479178 A, GB 2462584 A, and GB 1498655.

US5176402 discloses a three-point belt assembly mounted to the seat frame removably mounted to a vehicle. The upper portion of the belt extends through a guide having a tongue thereon releasably lockable with a buckle mounted to the vehicle frame above the seat. The guide tongue is pivotally constructed to facilitate swinging movement of the belt. The buckle is pivotally mounted to the vehicle frame above the seat facilitating pivotal web movement.

WO1992002389 discloses a seat belt assembly with an inertia reel belt (10) whose ends are anchored (5) low down to one side of a seat position and which can be pulled out to go over the seat occupant in two strands and be secured by an intermediate fitting (9), to an anchorage (6) at the other side. One strand will go over a shoulder, and to relieve the weight it is supported by a strap (13) which clips to another intermediate fitting (11). The strap may be adjustable in length, it may be formed into a loop for 'strap-hanging' and its anchorage (14) may be adjustable in the fore and aft directions of the seats.

However, there is a demand for a more simple system by which also a heavier wheelchair may be tied down to obtain a fixed position in a vehicle.

An object of the present invention is to provide a system for fastening wheelchairs in a vehicle, which system is simple to use and at the same time has sufficient strength to withstand the forces which will arise if the vehicle is involved in an accident.

Consequently, the present invention relates to a wheelchair tie down system for use in a vehicle, comprising at least one strap and a hook with an eye for receiving the at least one strap. A first end of the strap is adjustably fastened in a first fastening device attached to the wheelchair, and a second end of the strap is attached to a second fastening device attached to the vehicle, in such a way that the strap loops between the first and second fastening devices via the hook, and that the strap extends through the eye of the hook and is able to slide freely through the eye.

Thus, the present invention provides a very easy and efficient system to tie down and fasten a wheelchair in a vehicle. The vehicle may be a car, a van, a bus or a train or tram car airplane truck.

The wheelchair tie down system is easy and uncomplicated to use. The system is based on the strap running double through the eye of the hook, and on the fact that the strap is allowed to slide freely through the eye. The system may also be considered as the strap making a large loop between the first and second fastening devices, and the hook is able to slide on this loop. Thus, the hook is held by two layers of the strap which may correspond to a situation where the hook is held by two straps.

Such a configuration has not been considered suitable for the tie down of a wheelchair in a vehicle. The known systems comprise a single strap with a single hook, which means that the applied forces are absorbed by the single strap and the single hook. The hook is attached to the strap by means of a loop-formed part of the strap. The loop is formed by laying the strap double and then connecting the two layers of the strap together by sewing, webbing or by other means, such as e.g. welding. Alternatively, the two layers may be connected by a buckle. However, the loop is normally there to attach e.g. a hook or a buckle to a single strap. This means that the strap is not able to slide freely through the eye of the hook and, moreover, the forces distributed between the strap and the hook, will be concentrated on a minor part of a single strap. Furthermore, the straps used in the known systems do not loop or run double between a first fastening device and a second fastening device.

The configuration of the strap and the hook according to the invention makes it possible for the strap to take up forces from the hook, which forces will appear to be lower than in the prior art wheelchair tie up systems because of the two layers of straps, i.e. the strap running double between the eye of the hook and the first and second fastening devices. The applied force will be distributed between the two layers of the strap, and theoretically each layer of the strap should only withstand one half of the force.

In an embodiment, of the wheelchair fastening system, the first fastening device is a locking retractor. Locking retractors are widely used for e.g. safety belts, and make the strap easy to handle and adjust in respect of length.

In an alternative embodiment the first fastening device is a buckle which is easy to adjust in respect of the length of the strap and generally simple to use.

As the strap is fastened adjustably, in particular in respect of the length, in the first fastening device, the strap does not need to be adjustably fastened in the second fastening device. Thus, the second fastening device may be selected among less expensive devices such as eyes, bolts, clip devices or end brackets.

To ensure a safe securing of the wheelchair in the vehicle, it is preferred that at least four straps and four hooks are used in the wheelchair fastening system according to the present invention. The four straps run double between the eyes of four hooks and four first and second fastening devices.

A person sitting in the wheelchair will normally be secured to the tie down retractors attached to the vehicle by safety belts. Consequently, the wheelchair tie down system according to the invention is able to secure the wheelchair to the vehicle, e.g. to a floor rail system, a floor pocket system and/or the sides of the vehicle. Moreover, it is possible to attach the straps to structures on the seats or directly in the floor. In case of heavy wheelchairs and persons it may be desirable to prepare special attachments in the vehicle.

Although the first fastening device and the second fastening device may be attached to any suitable part of the vehicle, it is, however, preferred that the first fastening device and the second fastening device are attached to the floor part of the vehicle, such as to floor rails. The floor part of the vehicle is normally constructed to be able to carry a heavier load and is therefore most suitable for use for the system according to the invention. However, it is also possible to attach e.g. two straps to the front of the wheelchair, which straps may be fastened to a seat or floor part in front of the wheelchair. Two other straps attached to the back of the wheelchair may e.g. be fastened to a floor rail system or floor pocket.

The wheelchair fastening system according to the invention also includes the specially configured hook intended for engagement with the wheelchair. The hook is formed from one bar, bent to form an eye and a double hook. Preferably, the hook is formed from one bar with a circular cross-section. The circular cross-section makes the hook strong and easy to produce. For the purpose of obtaining the best possible properties in respect of strength, the hook may comprise welded spots in the part in which it is a double hook. The welded spots may also serve to keep the hook together.

The hook may be made from any suitable material, such as metal, composite material or plastics material. The requirements with respect to the material are that it is able to provide satisfactory strength and durability. The material may e.g. be cast, rolled formed, extruded or welded. However, the hook is preferably manufactured from metal such as steel, and the hook may comprise at least one coating. In a preferred embodiment, the hook comprises two coatings. The eye part may comprise a zinc flake coating to provide a smooth surface to allow the webbing to slide through the eye. The hook part may comprise a coating of softer plastics material such as a polyethylene coating or a polyvinyl chloride coating, which will reduce the risk of the hook damaging the wheelchair.

In an embodiment, the eye of the hook is shaped to have a triangular shape, meaning that the eye provides at least one part which is substantially linear (i.e. a side of the triangle). The strap or webbing may slide over this linear part without being subjected to different forces over the width of the strap. Thereby, the risk of failure of the strap is reduced. The known hooks are usually made from a steel bar formed to a single S-hook and an eye. The eye part of these hooks normally has a circular opening, meaning that a strap extending through such an eye part will be subjected to different forces over the width of the strap, i.e. when passing the curved edge of the eye. Moreover, the strap is sewn to the eye and not able to slide, which gives an unfavourable distribution of the forces. This drawback has been overcome by the hook of the present invention, providing a linear part which will distribute the forces evenly over the width of the strap.

Although, a preferred shape of the eye part is triangular due to the distribution of the forces, the shape may also be square or have any other configuration as long as the linear part for the strap to slide over is provided. Consequently, the eye of the hook comprises at least one substantially linear part having a width which is equivalent to the width of a strap.

The requirement in respect of the breaking strength of the hook may be increased as people tend to grow bigger with a higher weight. Thus, heavier people also influence the requirements in respect of safety systems such as the wheelchair tie down system according to the invention. Due to the distribution of force achieved by the wheelchair fastening system, the present invention is also highly suitable for fastening wheelchairs carrying heavy people.

The invention will now be explained in further detail with reference to drawings, in which:
- Fig. 1: shows a hook according to the invention;
- Fig. 2: shows the hook engaging a strap;
- Fig. 3: shows the wheelchair fastening system according to the invention; and
- Fig. 4: shows an alternative wheelchair fastening system according to the invention.

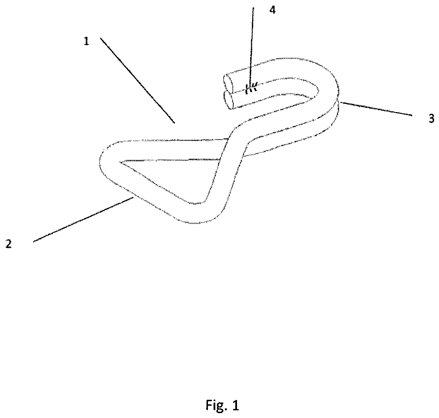

Figure 1 shows a hook 1 according to the invention. The hook comprises an eye part 2 and a hook part 3. The hook 1 is manufactured from a metal bar which has been bent to form the hook with the eye part 2 and the hook part 3, which is formed as a double hook. The hook part 3 comprises a welded spot 4 which serves to increase the strength of the hook and hold the two ends together.

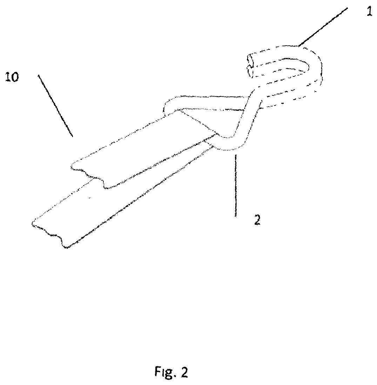

Figure 2 shows the hook 1 engaging a strap 10 which loops through the eye part and is able to slide freely through the eye part 2 of the hook 1. As may be seen, the eye part 2 has a substantially triangular shape which provides a substantially linear part for the strap to slide over, without subjecting the strap material to uneven distribution of the forces. As the strap 10 loops through the eye part 2 and runs double, the forces are distributed to both parts 10a,10b of the strap 10.

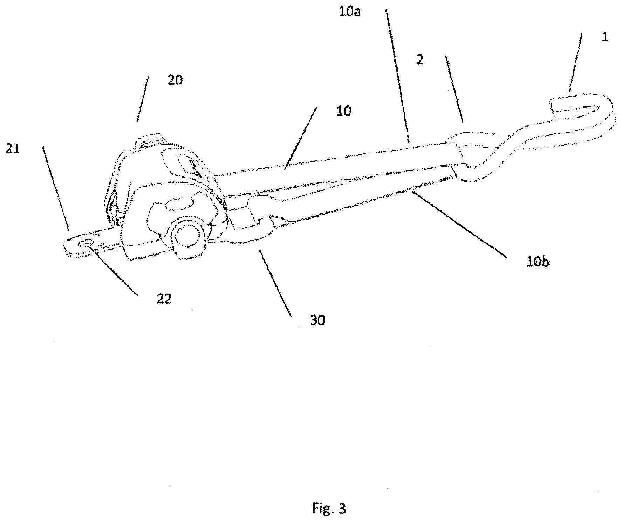

Figure 3 shows an embodiment of the wheelchair fastening system. The system comprises the hook 1 and the strap 10. The strap loops and runs double through the eye part 2 of the hook between the first fastening device, which is a locking retractor 20, and the second fastening device, which is an eye 30. The locking retractor 20 has a fastening plate 21 with an opening 22 intended to fasten the locking retractor to the floor of a vehicle, e.g. by a floor rail fitting. The length of the strap 10 may be adjusted by means of the locking retractor 20.

In the embodiment shown in figure 3, the eye 30 is attached to the locking retractor 20, however, the eye 30 may also be mounted in the floor of the vehicle, e.g. by means of a bolt or floor rail fitting or floor pocket.

As may be seen, the strap 10 is able to slide freely through the eye part 2 without any restrictions. The special configuration ensures that the forces applied to the hook part 3 are distributed via the eye part 2 to the two strap webbings 10a and 10b and to the fastening devices 20 and 30. In this way, the fastening devices 20 and 30 should theoretically each be affected by a force corresponding to approximately half the force affecting the hook part.
Consequently, the wheelchair fastening system according to present invention may withstand greater forces, or alternatively be dimensioned smaller and still be able to withstand forces as if the forces were absorbed by systems with only one strap, i.e. systems where the strap does not run double.

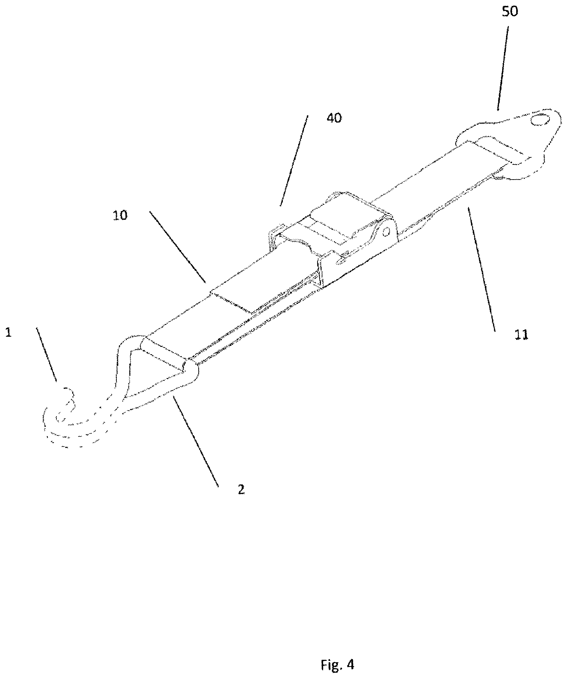

Figure 4 shows an alternative embodiment of the wheelchair fastening system according to the invention. In this alternative embodiment a buckle 40 is used as a first fastening device. An end bracket 50 intended for attachment to the floor of a vehicle is used as a second fastening device. The strap 10 runs double between the eye part 2 of the hook and the buckle and is able to slide freely through the eye part 2.

Between the end bracket 50 and the buckle 40, a portion 11 on the strap 10 running at least double is connected by sewing. This connected portion of the strap provides a more stable attachment of the strap 10 to the eye or end bracket 50. The entire system with the strap 10 that loops and runs double ensures that the forces which may be applied to system are distributed in such a way that the system better withstands these forces, whereby an improved wheelchair tie down system is obtained.

## Claims

1. A wheelchair tie down system for use in a vehicle, comprising at least one strap (10) and a hook (1) with an eye (2) for receiving the at least one strap (10), wherein a first end of the strap (10) is adjustably fastened in a first fastening device (20) adapted for attachment to a vehicle, and a second end of the strap (10) is attached to a second fastening device (30) adapted for attachment to a vehicle, whereby the first fastening device (20) is a locking retractor (20); and wherein the hook (1) is adapted for engagement with a wheelchair; wherein the strap (10) loops and runs double between the first (20) and second (30) fastening devices via the hook (1), and that the strap (10) extends through the eye (2) of the hook (1) and is able to slide freely through the eye (2); **characterized in that** a) the hook (1) comprises at least one coating and/or b) the hook (1) is formed from one bar, bent to form an eye (2) and a double hook (3).

2. A wheelchair tie down system according to claim 1, **characterized in that** the first fastening device is a locking retractor (20), and the second fastening device (30) is an eye (30).

3. A wheelchair tie down system according to any one of the preceding claims, **characterized in that** the system comprises at least two straps (10) and two hooks (11).

4. A wheelchair tie down system according to any one of the preceding claims, **characterized in that** the hook (1) is formed from one bar preferably with a circular or oval cross-section.

5. A wheelchair tie down system according to any one of the preceding claims, **characterized in that** the eye (2) of the hook (1) has a substantially triangular shape.

6. Use of a wheelchair tie down system according to any one of the preceding claims 1-7, to secure a wheelchair to a vehicle; wherein at least four straps and four hooks are used.

7. Use according to claim 6, wherein two straps are attached to the front of the wheelchair, which straps are fastened to a seat or floor part in front of the wheelchair; and wherein two other straps attached to the back of the wheelchair, which straps are fastened to a floor rail system or floor pocket.

8. Use according to claim 6, wherein two straps are attached to the front of the wheelchair, which straps are fastened to a seat or floor part in front of the wheelchair; and wherein two other straps attached to the back of the wheelchair, which straps are fastened to a floor rail system.

## Patentansprüche

1. System zur Festbindung eines Rollstuhls zur Verwendung in einem Fahrzeug, umfassend zumindest einen Gurt (10) und einen Haken (1) mit einer Öse (2) zur Aufnahme des zumindest einen Gurtes (10), wobei ein erstes Ende des Gurtes (10) einstellbar in einer ersten Befestigungsvorrichtung (20) befestigt ist, die zur Anbringung an einem Fahrzeug ausgelegt ist, und ein zweites Ende des Gurtes (10) an einer zweiten Befestigungsvorrichtung (30) angebracht ist, die zur Anbringung an einem Fahrzeug ausgelegt ist, wodurch die erste Befestigungsvorrichtung (20) eine Aufrolleinrichtung mit Verriegelung (20) ist; und wobei der Haken (1) für den Eingriff mit einem Rollstuhl ausgelegt ist; wobei der Gurt (10) über den Haken (1) eine Schlaufe bildet und zwischen der ersten (20) und zweiten (30) Befestigungsvorrichtung doppelt verläuft und sich der Gurt (10) durch die Öse (2) des Hakens (1) erstreckt und frei durch die Öse (2) gleiten kann; **dadurch gekennzeichnet, dass** a) der Haken (1) zumindest eine Beschichtung umfasst und/oder b) der Haken (1) aus einer Stange gebildet ist, die gebogen ist, um eine Öse (2) und einen Doppelhaken (3) zu bilden.

2. System zur Festbindung eines Rollstuhls nach Anspruch 1, **dadurch gekennzeichnet, dass** die erste Befestigungsvorrichtung eine Aufrolleinrichtung mit Verriegelung (20) ist und die zweite Befestigungsvorrichtung (30) eine Öse (30) ist.

3. System zur Festbindung eines Rollstuhls nach einem der vorhergehenden Ansprüche, **dadurch gekennzeichnet, dass** das System zumindest zwei Gurte (10) und zwei Haken (11) umfasst.

4. System zur Festbindung eines Rollstuhls nach einem der vorhergehenden Ansprüche, **dadurch gekennzeichnet, dass** der Haken (1) aus einer Stange gebildet ist, vorzugsweise mit einem kreisförmigen oder ovalen Querschnitt.

5. System zur Festbindung eines Rollstuhls nach einem der vorhergehenden Ansprüche, **dadurch gekennzeichnet, dass** die Öse (2) des Hakens (1) eine im Wesentlichen dreieckige Form aufweist.

6. Verwendung eines Systems zur Festbindung eines Rollstuhls nach einem der vorhergehenden Ansprüche 1-7 zur Sicherung eines Rollstuhls an einem Fahrzeug; wobei zumindest vier Gurte und vier Haken verwendet werden.

7. Verwendung nach Anspruch 6, wobei zwei Gurte an der Vorderseite des Rollstuhls angebracht sind, wobei die Gurte an einem Sitz oder Bodenteil vor dem Rollstuhl befestigt sind; und wobei zwei andere Gurte an der Rückseite des Rollstuhls angebracht sind, wobei die Gurte an einem Bodenschienensystem oder einer Bodentasche befestigt sind.

8. Verwendung nach Anspruch 6, wobei zwei Gurte an der Vorderseite des Rollstuhls angebracht sind, wobei die Gurte an einem Sitz oder Bodenteil vor dem Rollstuhl befestigt sind; und wobei zwei andere Gurte an der Rückseite des Rollstuhls angebracht sind, wobei die Gurte an einem Bodenschienensystem befestigt sind.

## Revendications

1. Système d'arrimage de fauteuil roulant destiné à être utilisé dans un véhicule, comprenant au moins une sangle (10) et un crochet (1) avec un oeil (2) pour recevoir l'au moins une sangle (10), dans lequel une première extrémité de la sangle (10) est fixée de manière réglable dans un premier dispositif de fixation (20) adapté pour être attaché dans un véhicule, et une seconde extrémité de la sangle (10) est attachée à un second dispositif de fixation (30) adapté pour être attaché dans un véhicule, moyennant quoi le premier dispositif de fixation (20) est un rétracteur à verrouillage (20) ; et dans lequel le crochet (1) est adapté pour venir en prise avec un fauteuil roulant ; dans lequel la sangle (10) forme une boucle et se double entre les premier (20) et second (30) dispositifs de fixation par l'intermédiaire du crochet (1), et la sangle (10) s'étend à travers l'oeil (2) du crochet (1) et est capable de glisser librement à travers l'oeil (2) ; **caractérisé en ce que** a) le crochet (1) comprend au moins un revêtement et/ou b) le crochet (1) est formé à partir d'une barre, courbée pour former un oeil (2) et un double crochet (3).

2. Système d'arrimage de fauteuil roulant selon la revendication 1, **caractérisé en ce que** le premier dispositif de fixation est un rétracteur à verrouillage (20), et le second dispositif de fixation (30) est un oeil (30).

3. Système d'arrimage de fauteuil roulant selon l'une quelconque des revendications précédentes, **caractérisé en ce que** le système comprend au moins deux sangles (10) et deux crochets (11).

4. Système d'arrimage de fauteuil roulant selon l'une quelconque des revendications précédentes, **caractérisé en ce que** le crochet (1) est formé à partir d'une barre de préférence avec une section transversale circulaire ou ovale.

5. Système d'arrimage de fauteuil roulant selon l'une quelconque des revendications précédentes, **caractérisé en ce que** l'oeil (2) du crochet (1) présente une forme sensiblement triangulaire.

6. Utilisation d'un système d'arrimage de fauteuil roulant selon l'une quelconque des revendications précédentes 1 à 7, pour fixer un fauteuil roulant à un véhicule ; dans lequel au moins quatre sangles et quatre crochets sont utilisés.

7. Utilisation selon la revendication 6, dans lequel deux sangles sont attachées à l'avant du fauteuil roulant, lesquelles sangles sont fixées à un siège ou à une partie de plancher devant le fauteuil roulant ; et dans lequel deux autres sangles sont attachées à l'arrière du fauteuil roulant, lesquelles sangles sont fixées à un système de rail de plancher ou à une poche de plancher.

8. Utilisation selon la revendication 6, dans lequel deux sangles sont attachées à l'avant du fauteuil roulant, lesquelles sangles sont attachées à un siège ou à une partie de plancher devant le fauteuil roulant ; et dans lequel deux autres sangles sont attachées à l'arrière du fauteuil roulant, lesquelles sangles sont fixées à un système de rail de plancher.
